Europäisches Patentamt

European Patent Office

Office européen des brevets

(11) Veröffentlichungsnummer: **0 324 051**
**A1**

(12) **EUROPÄISCHE PATENTANMELDUNG**

(21) Anmeldenummer: **88107128.6**

(22) Anmeldetag: **04.05.88**

(51) Int. Cl.⁴: **A44B 11/00 , B29C 63/04**

(30) Priorität: **09.01.88 DE 3800438**

(43) Veröffentlichungstag der Anmeldung:
**19.07.89 Patentblatt 89/29**

(84) Benannte Vertragsstaaten:
**DE FR GB IT**

(71) Anmelder: **ASTOR-WERK OTTO BERNING & CO. (GMBH & CO.)**
**Markgrafenstrasse 6**
**D-5830 Schwelm(DE)**

(72) Erfinder: **Kuhn, Elmar, Dipl.-Ing.**
**Am Kohlenmeier 140**
**D-5600 Wuppertal(DE)**
Erfinder: **Schöneweiss, Günter, Ing.-grad.**
**Ernst-Adolf-Str. 23**
**D-5830 Schwelm(DE)**
Erfinder: **Wittke, Günter**
**Timmerholt 51**
**D-4322 Sprockhövel 2(DE)**

(74) Vertreter: **Zapf, Christoph**
**Patentanwälte Dr. Solf und Zapf**
**Schlossbleiche 20**
**D-5600 Wuppertal 1(DE)**

(54) **Zierschnalle sowie Vorrichtung und Verfahren zu ihrer Herstellung.**

(57) Die Erfindung betrifft eine Zierschnalle (2) z.B. für Gürtel, bestehend aus einem zumindest teilweise mit einem flexiblen Bezugmaterial bezogenen Schnallenkörper. Ferner betrifft die Erfindung auch eine Vorrichtung sowie ein Verfahren zur Herstellung der Zierschnallen (2). Gemäß der Erfindung ist der Schnallenkörper als Kern mit einer Oberseite und einer Unterseite ausgebildet, wobei auf jeder Seite ein Zuschnitt (24) aus dem Bezugmaterial angeordnet ist, wobei die Bezugmaterial-Zuschnitte (24) über mindestens eine Klebebeschichtung, den Kern einschließend, stoffschlüssig miteinander und/oder mit dem Kern verbunden sind.

FIG. 1

## Zierschnalle sowie Vorrichtung und Verfahren zu ihrer Herstellung

Die Erfindung betrifft eine Zierschnalle z.B. für Gürtel, bestehend aus einem zumindest teilweise mit einem flexiblen Bezugmaterial bezogenen Schnallenkörper.

Weiterhin betrifft die Erfindung auch eine Vorrichtung zum Herstellen einer aus einem mit flexiblem Bezugmaterial bezogenen Schnallenkörper bestehenden, erfindungsgemäßen Zierschnalle, mit einem Unterwerkzeug und einem auf das Unterwerkzeug preßbaren Oberwerkzeug.

Schließlich betrifft die Erfindung auch ein Verfahren zum Herstellen der erfindungsgemäßen Zierschnalle, wobei mindestens ein Zuschnitt aus einem flexiblen Bezugmaterial an einem Schnallenkörper befestigt wird.

Schnallen der gattungsgemäßen Art sowie Verfahren und Vorrichtungen zu deren Herstellung sind z.B. aus der DE-PS 977 665, der DE-OS 35 19 147 und der DE-OS 35 22 310 bekannt. Nach diesem Stand der Technik besteht die Schnalle aus einem zweiteiligen Schnallenkörper, nämlich einem Schnallenunterteil und einem Schnallenoberteil, die über ihre umgebördelten Ränder miteinander verbunden sind. Dabei wird ein Zuschnitt des Bezugmaterials zwischen den beiden Teilen durch Einklemmen seines Randes gehalten. Nachteilig ist hierbei, daß der Schnallenkörper nur einseitig mit Bezugmaterial bezogen ist, so daß die Rückseite der Zierschnalle aus dem Material des Schnallenkörpers besteht, was aber zumeist ein unschönes Aussehen bietet, zumal der Schnallenkörper aus Metall bestehen muß.

Außerdem ist zum Herstellen der bekannten Zierschnalle eine sehr komplizierte und aufwendige Vorrichtung erforderlich, da diese gleichzeitig während des Zusammenführens von Ober-und Unterwerkzeug die Ränder des Bezugmaterials zwischen die beiden Teile des Schnallenkörpers führen sowie die beiden Teile miteinander verbinden muß. Dabei ist es zudem schwierig, das Bezugmaterial faltenfrei zu fixieren. Desweiteren sind Hilfswerkzeuge erforderlich, um das Bezugmaterial zusammen mit dem Schnallenoberteil vor der eigentlichen Montage in das Werkzeug einzubringen. Hierdurch ist eine hinsichtlich des Bezugmaterials individuelle Einzelanfertigung praktisch nicht durchführbar.

Der Erfindung liegt daher die Aufgabe zugrunde, eine Zierschnalle der gattungsgemäßen Art zu schaffen, die einfach, schnell, preiswert sowie hinsichtlich des Materials von Schnallenkörper und Bezugmaterial individuell auch in Einzelanfertigung herstellbar ist. Weiterhin soll auch eine Vorrichtung zum Herstellen der Zierschnalle angegeben werden, die sich durch derart einfachen und preiswerten Aufbau sowie einfache Bedienung auszeichnen soll, daß sie zusammen mit den Einzelteilen der Schnalle, d.h. dem Schnallenkörper und dem Bezugmaterial, gehandelt werden kann, so daß auch z.B. von Zwischenhändlern eine individuelle Einzelanfertigung der Zierschnalle durchführbar ist. Ein Verfahren zum Herstellen der Zierschnalle soll schließlich einfach und auch von ungeübten Personen durchführbar sein.

Zur Lösung dieser Aufgabe zeichnet sich die Zierschnalle erfindungsgemäß dadurch aus, daß der Schnallenkörper als Kern mit einer Oberseite und einer Unterseite ausgebildet ist, und daß auf jeder Seite ein Zuschnitt aus dem Bezugmaterial angeordnet ist, wobei die Bezugmaterial-Zuschnitte über mindestens eine Klebebeschichtung, den Kern einschließend, stoffschlüssig miteinander und/oder mit dem Kern verbunden sind. Besonders vorteilhaft ist es, wenn zumindest einer der Zuschnitte und/oder der Kern eine vorzugsweise vollflächige Klebebeschichtung aufweisen/aufweist. Dabei ist die Klebebeschichtung selbstklebend oder aber thermisch aktivierbar ausgebildet.

Die erfindungsgemäße Zierschnalle, die vorteilhafterweise vollständig mit Bezugmaterial umgeben ist, so daß auch ihre Rückseite ein ansprechendes, individuell gestaltbares Aussehen bietet, ist aufgrund der bereits vor dem eigentlichen Beziehen des Schnallenkörpers vorhandenen, erfindungsgemäßen Klebeschichtung(en) sehr einfach z.B. auch mit einem einteiligen Kern herstellbar, indem zunächst aus dem Bezugmaterial zwei den Schnallenkörper flächenmäßig überdeckende Stücke zugeschnitten und die Bezugmaterial-Stücke nachfolgend unter Einschluß des Schnallenkörpers gegeneinandergepreßt werden. Allein durch dieses Gegeneinanderpressen werden die Bezugmaterial-Stücke erfindungsgemäß über die bereits vorhandene(n) Klebeschichtung(en) der Bezugmaterial-Stücke und/oder des Schnallenkörpers miteinander und/oder mit dem Schnallenkörper verbunden. Hierdurch läßt sich die erfindungsgemäße Zierschnalle in nur einem einzigen Arbeitsgang herstellen, da das Bezugmaterial allein durch die Klebebeschichtung(en) befestigt ist und sich so auch ein Vernähen der Zuschnitte im Bereich eines den Schnallenkörper überragenden Randes erübrigen kann.

Eine Vorrichtung gemäß der Erfindung ist dadurch gekennzeichnet, daß das Unterwerkzeug und das Oberwerkzeug einander zugekehrte Andruckflächen aufweisen. In einem der Werkzeuge ist im Bereich der Andruckfläche eine an den Schnallenkörper angepaßte Aufnahme gebildet. Vorzugsweise ist die Aufnahme in dem Unterwerkzeug angeordnet.

Zur Herstellung der Zierschnalle wird erfindungsgemäß auf das Bezugmaterial und/oder auf den Schnallenkörper mindestens eine Klebebeschichtung aufgebracht, aus dem Bezugmaterial werden zwei den Schnallenkörper flächenmäßig zumindest überdeckende Stücke zugeschnitten, und nachfolgend werden die Bezugmaterial-Stücke unter Einschluß des Schnallenkörpers gegeneinander gepreßt und hierdurch stoffschlüssig miteinander und/oder mit dem Schnallenkörper verbunden.

Weitere vorteilhafte Ausgestaltungsmerkmale der Erfindung sind in den Unteransprüchen enthalten.

Anhand der Zeichnung soll im folgenden die Erfindung beispielhaft näher erläutert werden. Dabei zeigen:

Fig. 1 eine Aufsicht auf eine mögliche Ausführungsform einer erfindungsgemäßen Zierschnalle,

Fig. 2 einen gegenüber Fig. 1 vergrößerten Schnitt durch die Zierschnalle längs der Linie II-II gemäß Fig. 1,

Fig. 3 und 4 Perspektivansichten einer erfindungsgemäßen Vorrichtung zum Herstellen der Zierschnalle nach Fig. 1 unter zusätzlicher Darstellung von Bezugmaterial-Stücken und einem Schnallenkörper,

Fig. 5 einen Schnitt durch das Oberwerkzeug längs der Linie V-V in Fig. 4,

Fig. 6 einen Schnitt durch das Unterwerkzeug längs der Linie VI-VI in Fig. 4 unter zusätzlicher Darstellung von aufgelegten Bezugmaterial-Stücken und einem zwischen diesen angeordneten Schnallenkörper,

Fig. 7 einen Schnitt analog zu Fig. 2 durch eine zweite Ausführungsform der erfindungsgemäßen Zierschnalle,

Fig. 8 bis 13 Perspektivansichten einer erfindungsgemäßen Vorrichtung zum Herstellen der Zierschnalle nach Fig. 7 in verschiedenen Arbeitsstellungen,

Fig. 14 bis 18 vertikale Teilschnitte durch die erfindungsgemäße Vorrichtung nach Fig. 9 und 10 in verschiedenen Arbeitsstellungen

Fig. 19 einen Schnitt analog zu Fig. 2 und 7 durch eine dritte Ausführungsform der erfindungsgemäßen Zierschnalle,

Fig. 20 bis 25 Perspektivansichten einer erfindungsgemäßen Vorrichtung zum Herstellen der Zierschnalle nach Fig. 19 in verschiedenen Arbeitsstellungen und

Fig. 26 bis 30 vertikale Teilschnitte durch die erfindungsgemäße Vorrichtung nach Fig. 22 und 23 in verschiedenen Arbeitstellungen.

In den verschiedenen Figuren der Zeichnung sind gleiche Teile jeweils mit den gleichen Bezugsziffern bezeichnet.

Eine erfindungsgemäße Zierschnalle 2 besteht aus einem Schnallenkörper 4, der mit einem flexiblen Bezugmaterial 6 bezogen ist. Als Bezugmaterial 6 eignen sich beliebige, flexible Materialien, wie z.B. Textilstoffe, Kunststofffolien, Leder oder dergleichen.

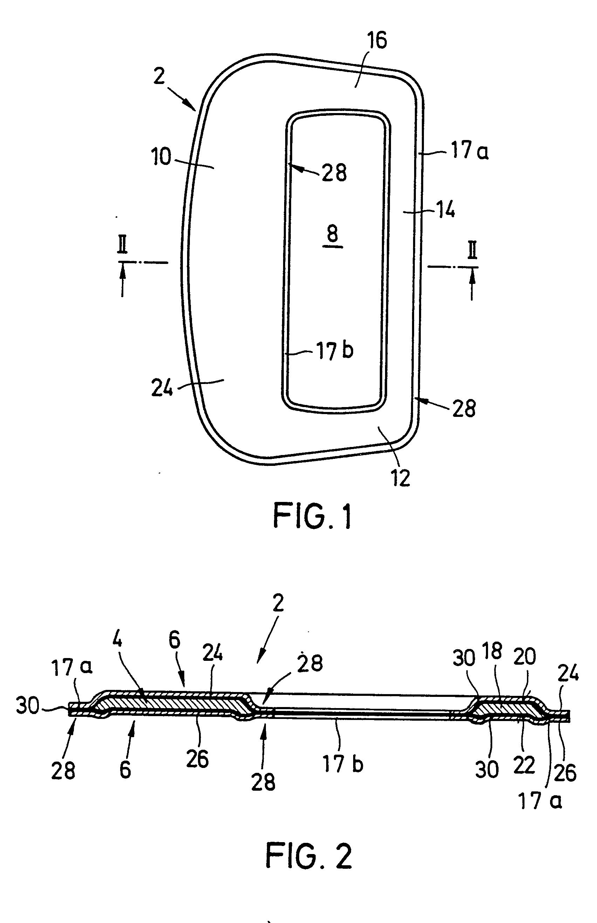

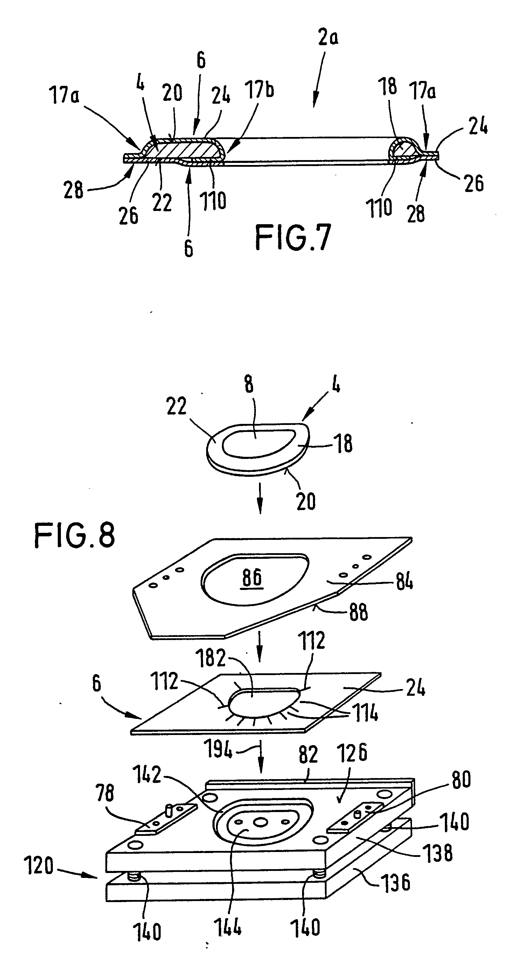

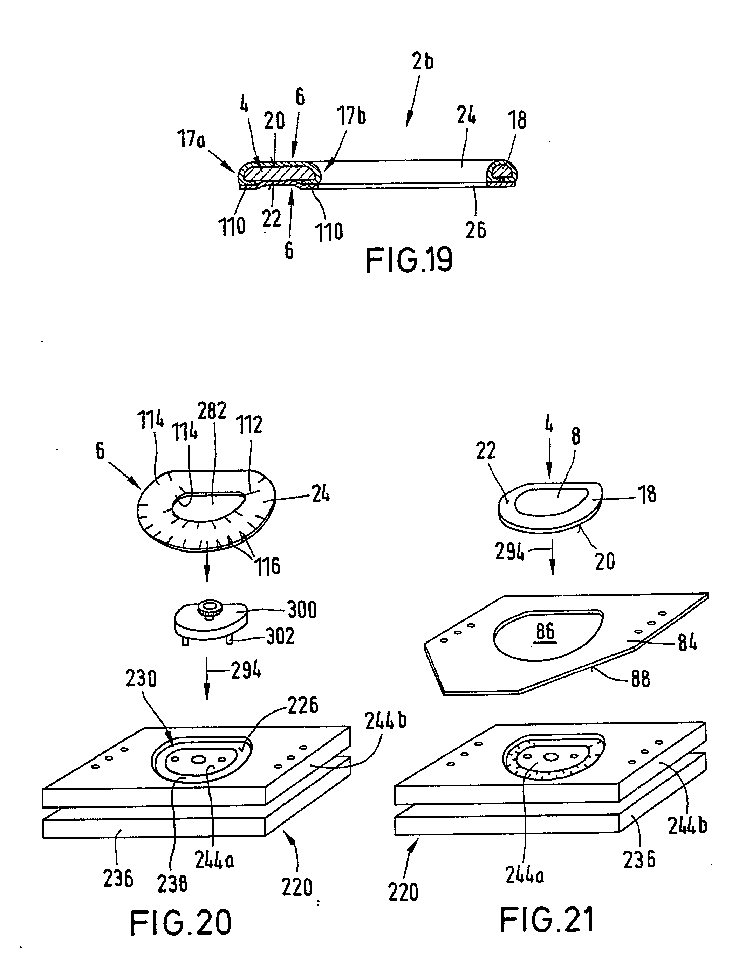

In dem in Fig. 1 und 2 dargestellten Ausführungsbeispiel der Erfindung ist - wie am besten in Fig. 1 zu erkennen ist - die Zierschnalle 2 bzw. der Schnallenkörper 4 rahmenförmig aus vier im wesentlichen rechtwinklig zueinander angeordneten, eine Öffnung umschließenden Stegen 10, 12, 14 und 16 ausgebildet. Alternativ dazu sind die Zierschnallen 2a und 2b gemäß Fig. 7 und 19 D-förmig ebenfalls mit einer Öffnung 8 ausgebildet. Die erfindungsgemäße Zierschnalle 2, 2a, 2b besitzt demzufolge einen der Öffnung 8 abgekehrten, äußeren Randbereich 17a und einen der Öffnung 8 zugekehrten, inneren Randbereich 17b. Allerdings ist die Erfindung keineswegs auf diese Raumformen beschränkt, vielmehr kann die erfindungsgemäße Zierschnalle 2 beliebige Formen besitzen. Beispielsweise kann die Zierschnalle auch als sog. Doppelstegschnalle oder aber knopfförmig ausgebildet sein (nicht dargestellt). Im letztgenannten Fall weist der Schnallenkörper dann ein sich durch das Bezugmaterial 6 erstreckendes, z.B. ösenförmiges Befestigungselement auf.

Erfindungsgemäß ist nun der Schnallenkörper 4 als vorzugsweise einteiliger Kern 18 mit einer Oberseite 20 und einer Unterseite 22 ausgebildet, wobei auf jeder Seite 20, 22 ein Zuschnitt 24, 26 aus dem Bezugmaterial 6 befestigt ist. Aufgrund der Einstückigkeit des Kerns 18 kann dieser sehr preiswert z.B. aus Kunststoff oder einem ggf. beschichteten Metall beispielsweise als Stanzteil hergestellt werden.

In der Ausführung nach Fig. 1 und 2 sind die Bezugmaterial-Zuschnitte 24, 26 flächenmäßig derart größer als die Oberseite 20 bzw. die Unterseite 22 des Kerns 18 ausgebildet, daß sie den Kern 18 jeweils mit mindestens einem Rand 28 überragen. Dabei sind die Zuschnitte 24, 26 erfindungsgemäß zumindest im Bereich der parallel aufeinanderliegenden Ränder 28, den Kern 18 einschließend, stoffschlüssig miteinander verbunden, und zwar über eine erfindungsgemäß zumindest im Bereich des Randes 28 eines der Zuschnitte 24, 26 angeordnete Klebebeschichtung 30. Gegebenenfalls können die Zuschnitte 24, 26 im Bereich der Ränder 28 zusätzlich miteinander vernäht (gesteppt) sein (nicht dargestellt).

Bei der beispielhaft dargestellten Ausführungsform der Zierschnalle 2 mit der Durchgangsöffnung 8 weisen die Zuschnitte 24, 26 natürlich sowohl im äußeren Randbereich 17a als auch im inneren Randbereich 17b der Zierschnalle 2 jeweils einen den Kern 18 überragenden Rand 28 auf.

Es ist besonders zweckmäßig, wenn zumindest einer der Zuschnitte 24, 26 und/oder der Kern 18 eine vorzugsweise vollflächige Klebebeschichtung 30 aufweisen/aufweist. Gemäß Fig. 2 besitzt jeder Zuschnitt 24, 26 eine Klebebeschichtung 30, die somit jeweils zwischen dem Zuschnitt 24 bzw. 26 und dem Kern 18 sowie aber auch wischen den Zuschnitten 24, 26 im Bereich der Ränder 28 angeordnet ist/sind. Die Klebebeschichtungen 30 können aus einem doppelseitigen Klebeband oder einem trägeriosen, aufgetragenen Klebstoff bestehen. Dabei ist es besonders vorteilhaft, wenn ein thermisch aktivierbarer Klebstoff verwendet wird, was zu einer sehr sauberen Verarbeitung führt, da der Klebstoff erst nach dem Zusammenfügen der Teile durch Erwärmung wirksam wird.

Wie weiterhin aus Fig. 2 zu erkennen ist, sind die Ränder 28 der Zuschnitte 24, 26 etwa in der Ebene der Unterseite 22 des Kerns 18 angeordnet.

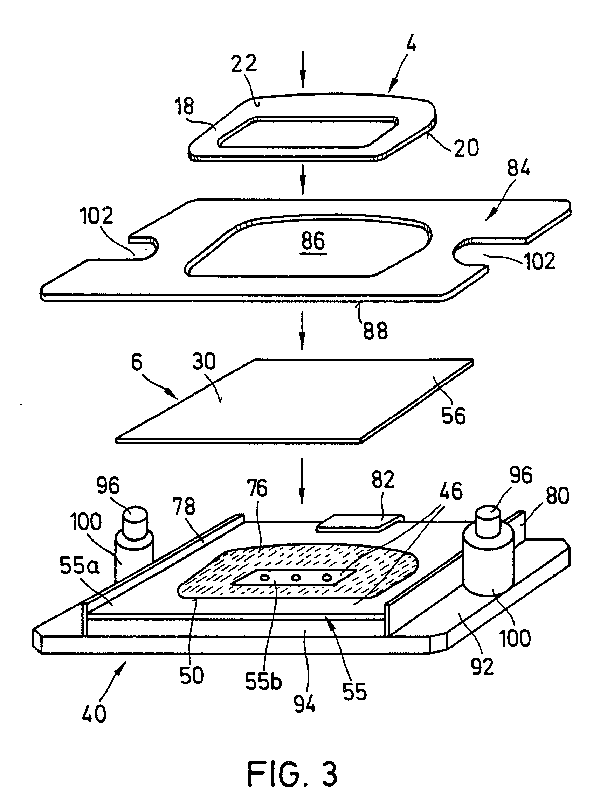

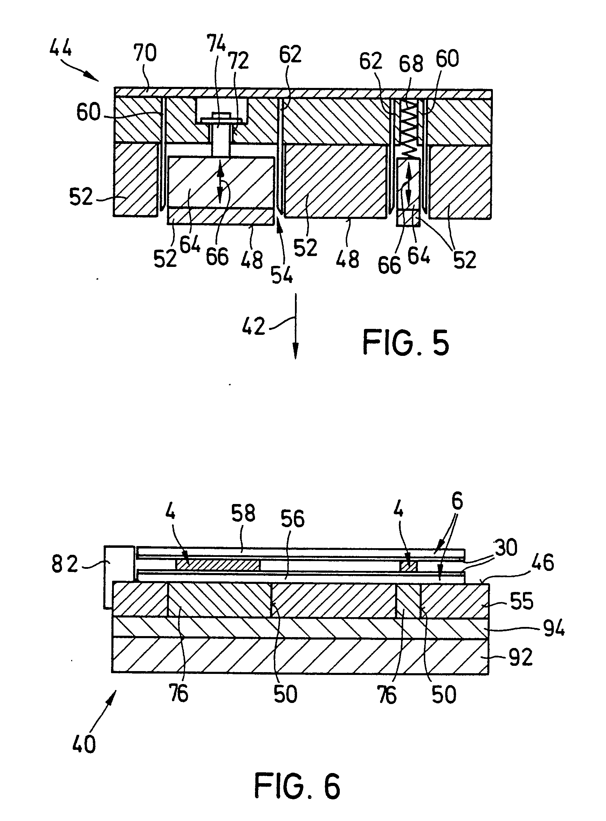

Im folgenden soll insbesondere unter Bezug auf die Fig. 3 bis 6 die erfindungsgemäße Vorrichtung zum Herstellen der in Fig. 1 und 2 dargestellten Zierschnalle 2 beschrieben werden. Die Vorrichtung besteht aus einem Unterwerkzeug 40 und einem z.B. mittels einer nicht dargestellten Druckvorrichtung (Presse) in definierter Ausrichtung in Pfeilrichtung 42 auf das Unterwerkzeug 40 preßbaren Oberwerkzeug 44. Erfindungsgemäß weisen das Unterwerkzeug 40 und das Oberwerkzeug 44 einander zugekehrte Andruckflächen 46, 48 auf, wobei in einem der Werkzeuge 40, 44 im Bereich der Andruckfläche 46 bzw. 48, im dargestellten Beispiel im Bereich der Andruckfläche 46 des Unterwerkzeugs 40, eine Aufnahme 50 (siehe insbesondere Fig. 6) für den Schnallenkörper 4 gebildet ist. Diese Aufnahme 50 besitzt eine senk recht zu der Andruckfläche 46 gemessene Tiefe, die ≤ der Dicke des Schnallenkörpers 4 zuzüglich einmal der Dicke des Bezugmaterials 6 ist. Weiterhin weist die Aufnahme 50 eine dem Schnallenkörper 4 entsprechende Flächenkontur auf, die jedoch randlich zumindest um die Dicke des Bezugmaterials 6 größer als die Flächenkontur des Schnallenkörpers 4 ist. Aufgrund dieser Ausbildung wird die erfindungsgemäße Zierschnalle 2, ausgehend von dem in Fig. 6 gezeigten Zustand, durch einen mit dem Oberwerkzeug 44 in Pfeilrichtung 42 ausgeübten Druck bis auf die Ränder 28 der Bezugmaterial-Zuschnitte 24, 26 innerhalb der Aufnahme 50 aufgenommen bzw. in die Aufnahme 50 "eingezogen".

Das Oberwerkzeug 44 besitzt vorteilhafterweise auf seiner dem Unterwerkzeug 40 zugekehrten Seite eine Schicht 52 aus einem gummielastischen Material, z.B. Schaumstoff oder Zellgummi, deren dem Unterwerkzeug 40 zugekehrte Oberfläche die Andruckfläche 48 bildet. Aufgrund der Elastizität kann sich die Andruckfläche 48 elastisch an die Oberflächenstruktur der Zierschnalle 2 anpassen.

Es ist besonders vorteilhaft, wenn - wie in Fig. 5 dargestellt - das Oberwerkzeug 44 eine mit der Andruckfläche 46 des Unterwerkzeuges 40 zum Ausstanzen des Bezugmaterials 6 zusammenwirkende Stanzmessereinrichtung 54 aufweist. Die Andruckfläche 46 des Unterwerkzeuges 40 wird dabei vorteilhafterweise von der Oberfläche einer Stanzplatte 55 gebildet. Die Stanzmessereinrichtung 54 stanzt beim Auftreffen auf die Stanzplatte 55 bzw. die Andruckfläche 46 aus z.B. in rechteckiger Form grob zugeschnittenen Bezugmaterial-Stücken 56, 58 die endgültige Form der Zuschnitte 24, 26 aus. Für die beispielhaft dargestellte Ausführungs form der Zierschnalle 2 besteht die Stanzmessereinrichtung 54 erfindungsgemäß aus zwei innerhalb des Oberwerkzeugs 44 in zu der Andruckfläche 48 senkrechter Anordnung befestigten und in der äußeren Kontur der Ränder 28 der Bezugmaterial-Zuschnitte 24, 26 ausgebildeten Stanzmessern 60, 62.

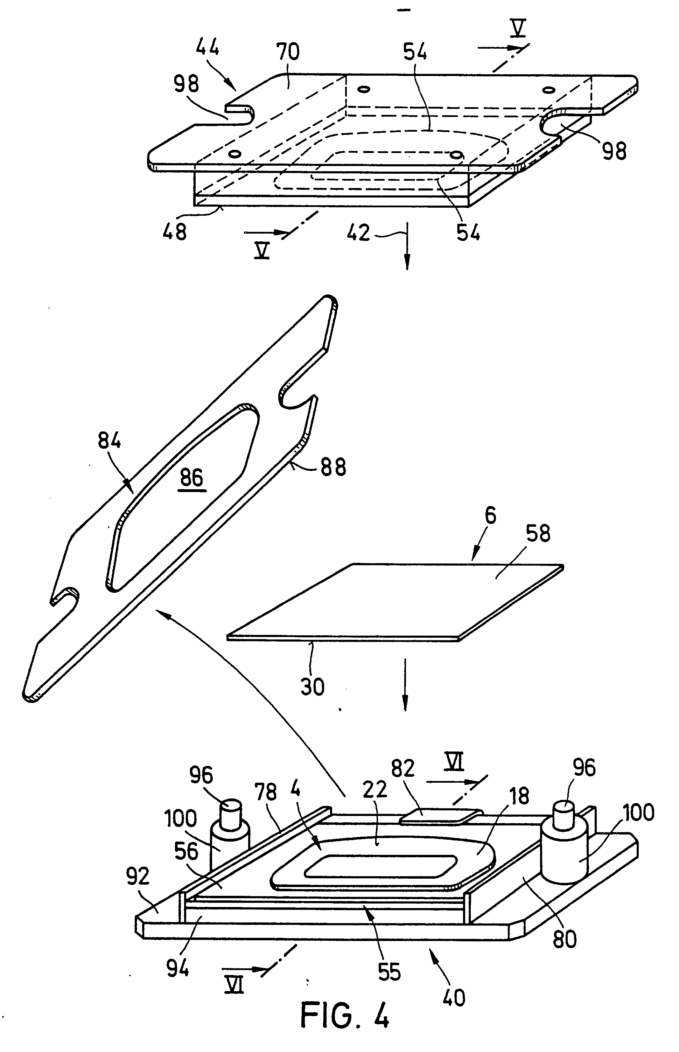

Die Aufnahme 50 kann als in dem Unterwerkzeug 40 angeordnete Vertiefung bzw. - wie dargestellt - als Durchbruch bzw. Durchgangsöffnung in der separaten Stanzplatte 55 gebildet sein. Diese Ausbildung hat den entscheidenden Vorteil, daß im Falle von durch die Stanzvorgänge verursachten Verschleißerscheinungen der Stanzplatte 55 diese gewendet werden kann, so daß sich ihre Haltbarkeit verdoppelt. Die Stanzplatte 55 ist auf einer Aufnahmeplatte 94 befestigt (siehe Fig. 3 und 4) und besteht im dargestellten Beispiel, wobei die herzustellende Schnalle 2 die mittlere Öffnung 8 besitzt, natürlich aus zwei getrennten Teilen, d.h. aus einem äußeren Teil 55a und einem inneren Teil 55b (siehe Fig. 3).

In einer in Fig. 5 verdeutlichten, vorteilhaften Weiterbildung der Erfindung ist der von den Stanzmessern 60, 62 eingeschlossene Bereich der Andruckfläche 48 des Oberwerkzeugs 44 von der Oberfläche eines Niederhalters 64 bzw. von der Oberfläche der an diesem Niederhalter 64 ebenfalls befestigten, gummielastischen Schicht 52 gebildet, wobei der Niederhalter 64 in einer zu der Andruckfläche 48 senkrechten Richtung, d.h. in Doppelpfeilrichtung 66, gegen Federkraft beweglich gelagert ist. Zweckmäßigerweise steht dabei der von dem Niederhalter 64 gebildete Bereich der Andruckfläche 48 nach unten in Richtung des Unterwerkzeugs 40 über den übrigen Bereich der Andruckfläche 48 vor, d.h. der Niederhalter 64 eilt dem Oberwerkzeug 44 vor. Zur Erzeugung der Federkraft sind mehrere Druckfedern 68 (in Fig. 5 ist nur eine Druckfeder 68 erkennbar) zwischen dem Niederhalter 64 und einer der Andruckfläche 48 abgekehrten, oberen Kopfplatte 70 des Oberwerkzeugs 44 unter Vorspannung angeordnet. Zur Führung des beweglich gelagerten Niederhalters 64 dienen in Führungsbohrungen 72 geführte Führungszapfen 74, von denen ebenfalls nur einer erkennbar ist. Wie in Fig. 5 deutlich zu erkennen ist, ist die in dem übrigen Bereich des Oberwerkzeugs 44 vorhandene, elastische Schicht 52 dicker ausgebildet als die Schicht 52 im Bereich des Niederhalters 64, um auch hier ein elastisches Zurückweichen der Andruckfläche 48 gegenüber dem nach oben versetzten Stanzschneiden der Stanzmesser 60, 62 zu gewährleisten, wodurch die Stanzmesser 60, 62 auf die Stanzplatte 55 bzw. die Andruckfläche 46 des Unterwerkzeuges 40 auftreffen und so wirksam werden können.

Erfindungsgemäß kann weiterhin zumindest das Unterwerkzeug 40 eine Heizeinrichtung zum Erhitzen seiner Andruckfläche 46 aufweisen (in der Zeichnung nicht erkennbar), deren Funktion noch erklärt wird.

Wie in Fig. 3 und 6 erkennbar ist, ist vorteilhafterweise innerhalb der Aufnahme 50 ein insbesondere aus einem gummielastischen, d.h. elastisch komprimierbaren Material, z.B. Zellgummi, bestehender Auswerfer 76 angeordnet. In diesem Fall vergrößert sich die oben angegebene Tiefe der Aufnahme um die Dicke des komprimierten Auswerfers 76. Die Funktion dieses Auswerfers 76 wird im folgenden ebenfalls noch erläutert.

Das Unterwerkzeug 40 weist gemäß Fig. 3 und 4 zwei Seitenanschläge 78, 80 und einen Tiefenanschlag 82 für die insbesondere rechteckigen Stücke 56 und 58 des Bezugmaterials 6 auf. Diese Anschläge 78, 80, 82 dienen zum lagerichtigen Ausrichten der beiden Bezugmaterial-Stücke 56, 58 relativ zu der Aufnahme 50.

Weiterhin ist zum Ausrichten des Schnallenkörpers 4 eine in definierter Ausrichtung auf das Unterwerkzeug 40 auflegbare Einlegeschablone 84 vorgesehen, die rahmenartig mit einer mit der Aufnahme 50 fluchtenden Einlegeöffnung 86 für den Schnallenkörper 4 ausgebildet ist. Dabei weist die Einlegeöffnung 86 eine derart an den Schnallenkörper 4 angepaßte Größe auf, daß der Schnallenkörper 4 im wesentlichen spielfrei in die Einlegeöffnung 86 paßt. Es ist zweckmäßig, wenn die Einlegeschablone 84 zumindest auf ihrer dem Unterwerkzeug 40 zugekehrten Unterseite 88 eine Anti-Haft-Beschichtung (nicht erkennbar) aufweist, die insbesondere aus PTFE (Polytetrafluoräthylen) besteht. Dieses Material ist auch unter dem Warenzeichen Teflon bekannt. Der Sinn dieser Beschichtung wird im folgenden noch erklärt.

In den Fig. 3 und 4 ist noch zu erkennen, daß das Unterwerkzeug 40 eine Grundplatte 92 aufweist, die auf ihrer Oberfläche die schmaler ausgebildete Aufnahmeplatte 94 trägt, wobei die Aufnahmeplatte 94 die Stanzplatte 55 trägt. Seitlich neben der Stanzplatte 55 und der Aufnahmeplatte 94 weist das Unterwerkzeug 40 jeweils einen vorzugsweise an der Grundplatte 92 befestigten Führungsbolzen 96 auf, wobei diese Führungsbolzen 96 zur Führung des Oberwerkzeugs 44 mit Führungsausnehmungen 98 in seitlichen Verlängerungen der Kopfplatte 70 des Oberwerkzeugs 44 zusammenwirken. Jeder Führungsbolzen 96 trägt spielfrei eine Distanzhülse 100, auf welchen Distanzhülsen 100 das aufgepreßte Oberwerkzeug 44 mit den Verlängerungen der Kopfplatte 70 zur Anlage kommt. Weiterhin wirken die Distanzhülsen 100 auch zur genauen Positionierung der Einlegeschablone 84 mit an dieser vorgesehenen Ausnehmungen 102 zusammen.

Im folgenden soll nun die Herstellung einer erfindungsgemäßen Zierschnalle der Ausführungsform nach Fig. 1 und 2 erläutert werden.

Zunächst werden aus dem Bezugmaterial 6 zwei den Schnallenkörper 4 flächenmäßig mit Überstand überdeckende, vorzugsweise rechteckige Stücke 56, 58 grob zugeschnitten, z.B. ausgestanzt. Diese Bezugmaterial-Stücke 56, 58 weisen vorzugsweise bereits jeweils eine Klebebeschichtung 30 auf. Das untere Bezugmaterial-Stück 56 wird nun mit der Klebebeschichtung 30 nach oben auf die Andruckfläche 46 des Unterwerkzeugs 40 aufgelegt, wobei die Anschläge 78, 80 und 82 zu dessen Ausrichtung dienen. Nachfolgend wird nun die Einlegeschablone 84 auf das Unterwerkzeug 40 aufgelegt, wobei die Distanzhülsen 100 in die Ausnehmungen 102 eingreifen und die Einlegeschablone 84 so derart positionieren, daß deren Einlegeöffnung 86 die Aufnahme 50 des Unterwerkzeugs 40 genau überdeckt. In die Einlegeöffnung 86 der Einlegeschablone 84 kann nun der Schnallenkörper 4 bzw. der Kern 18 in lagerichtiger Zuordnung zu der Aufnahme 50 mit der Unterseite 22 nach oben eingelegt und dann die Einlegeschablone 84 wieder abgenommen werden. Dieser Zustand ist in Fig. 4 dargestellt. Für das Abnehmen der Schablone 84 ist die oben bereits erwähnte Anti-Haft-Beschichtung besonders vorteilhaft, da diese ein Anhaften des Bezugmaterial-Stückes 56 an der Unterseite 88 der Schablone 84 über die nach oben weisende Klebebeschichtung 30 wirksam verhindert, wodurch ein "Mitabnehmen" des Bezugmaterial-Stückes 56 mit der Schablone 84 ebenfalls ausgeschlossen ist. Es wird nun das zweite, obere Bezugmaterial-Stück 58 mit der Klebebeschichtung 30 nach unten auf das Unterwerkzeug 40 bzw. auf den Schnallenkörper 4 aufgelegt. Danach wird das Oberwerkzeug 44 auf das Unterwerkzeug 40 aufgesetzt, wobei die Führungsbolzen 96 in die Führungsausnehmungen 98 eingreifen. Mit einer geeigneten, nicht dargestellten Druckvorrichtung (Presse) werden die beiden Werkzeugteile 40, 44 gegeneinandergepreßt, wodurch zusammen mit dem Schnallenkörper 4 bzw. dem Kern 18 das untere Bezugmaterial-Stück 56 in die Aufnahme 50 eingedrückt wird und die Bezugmaterial-Stücke 56, 58 unter Einschluß des Schnallenkörpers 4 gegeneinandergepreßt werden. Aufgrund der Klebeschichtungen 30 verbinden sich hierdurch die Bezugmaterial-Stücke 56, 58 mit dem Schnallenkörper 4 sowie auch miteinander in dem Bereich der den Schnallenkörper überragenden Ränder 28. Unmittelbar nach dem bzw. während des Gegeneinanderpressens der Bezugmaterial-Stücke bzw. der Werkzeugteile 40, 44 werden aus den Bezugmaterial-Stücken 56, 58 mittels der Stanzmessereinrichtung 54, d.h. durch Auftreffen der Stanzmesser 60, 62 auf der Stanzplatte 55, die endgültigen Bezugmaterial-Zuschnitte unter Bildung der Ränder 28 ausgestanzt.

Im Falle der Verwendung eines thermisch aktivierbaren Klebstoffes erfolgt die Verklebung durch Erhitzen, indem zumindest eines der beiden Werkzeugteile 40, 44 beheizbar ausgebildet ist. In diesem Fall könnte auch die Anti-Haft-Beschichtung der Einlegeschablone 84 entfallen.

Abschließend braucht nur noch das Oberwerkzeug 44 wieder nach oben abgenommen zu werden, und die fertige Zierschnalle 2 sowie das abgetrennte Bezugmaterial 6 können entnommen werden, wobei vorteilhafterweise der Auswerfer 76 die Schnalle 2 nach oben aus der Aufnahme 50 hinausdrückt.

Die Bezugmaterial-Zuschnitte 24, 26 können nun noch gegebenenfalls zusätzlich im Bereich der Ränder 28 miteinander vernäht werden, was vorteilhaft für das Aussehen und die Haltbarkeit der Zierschnalle 2 ist.

Die in Fig. 7 dargestellte Zierschnalle 2a unterscheidet sich von der Zierschnalle 2 gemäß Fig. 1 und 2 dadurch, daß der obere Bezugmaterial-Zuschnitt 24 im inneren Randbereich 17b der Zierschnalle 2a erfindungsgemäß einen Rand 110 aufweist, der von der Oberseite 20 des Kerns 18 auf die Unterseite 22 verläuft und hier zwischen dem Kern 18 und dem unteren Zuschnitt 26 angeordnet ist. Je nach Art des verwendeten Bezugmaterials sowie je nach Umfangskontur des Schnallenkörpers 4 kann es dabei zweckmäßig sein, wenn im Bereich des Randes 110 durch Einschnitte 112 mehrere Randlappen 114 (siehe Fig. 8) gebildet sind. Der untere Zuschnitt 26 ist erfindungsgemäß im inneren Randbereich 17b etwa deckungsgleich mit dem Kern 18 ausgebildet. Im äußeren Randbereich 17a ist die Zierschnalle 2a dagegen analog zu der Zierschnalle 2 mit parallel aufeinanderliegenden Bezugmaterial-Rändern 28 ausgebildet. Auch in diesem Fall weisen beide Zuschnitte 24, 26 vorzugsweise vollflächige Klebeschichtungen auf, die in Fig. 7 jedoch nicht erkennbar sind. Der besondere Vorteil der Ausbildung nach Fig. 7 besteht darin, daß die Zierschnalle 2a im inneren Randbereich 17b ohne nach innen in die Öffnung 8 ragende Bezugmaterial-Ränder 28 ausgebildet ist, was eine Befestigung der Schnalle 2a an z.B. einem Gürtel oder dergleichen erleichtert. Zudem ist hierdurch die Haltbarkeit gerade in dem stark beanspruchten inneren Randbereich 17b erheblich verbessert. Außerdem hat die Zierschnalle 2a ein ansprechendes Aussehen.

Bei der in Fig. 19 dargestellten, erfindungsgemäßen Zierschnalle 2b weist der obere Zuschnitt 24 sowohl im inneren Randbereich 17b als auch im äußeren Randbereich 17a jeweils einen Rand 110 auf, wobei auch diese Ränder 110 jeweils von der Oberseite 20 des Kerns 18 auf dessen Unterseite 22 verlaufen und hier zwischen dem Kern 18 und dem unteren Zuschnitt 26 angeordnet sind. Auch hier ist es wiederum zweckmäßig, wenn die Ränder 110 aus durch Einschnitte 112 bzw. Ausschnitte 116 gebildeten Randlappen 114 bestehen (siehe Fig. 20). In diesem Fall ist der untere Bezugmaterial-Zuschnitt 26 etwa deckungsgleich mit dem Kern 18 ausgebildet, und zwar in beiden Randbereichen 17a und 17b. Beide Zuschnitte 24, 26 weisen wiederum vorzugsweise vollflächige, in Fig. 19 ebenfalls nicht erkennbare Klebebeschichtungen auf. Diese Ausbildung gewährleistet eine besonders gute Haltbarkeit sowie ein besonders ansprechendes Aussehen.

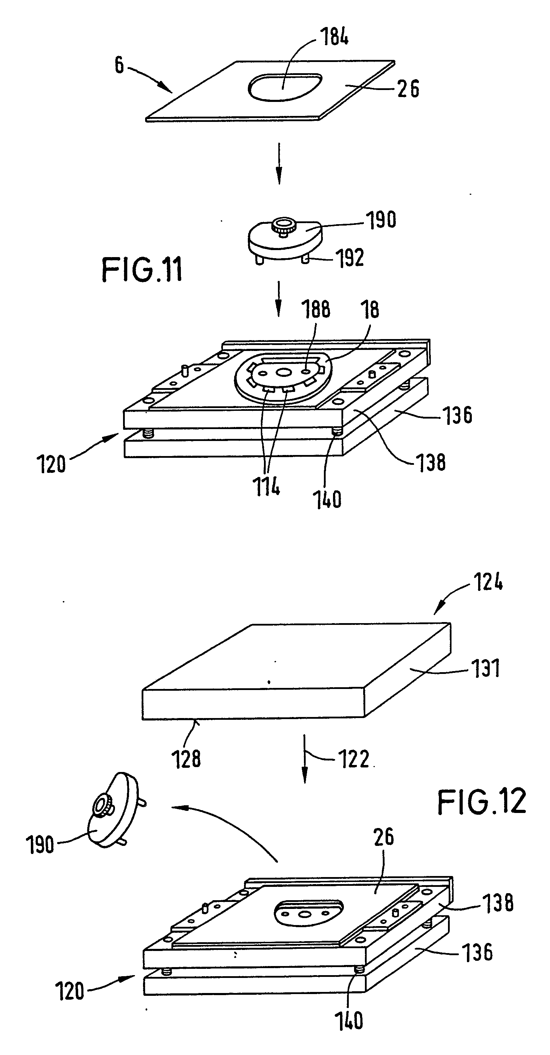

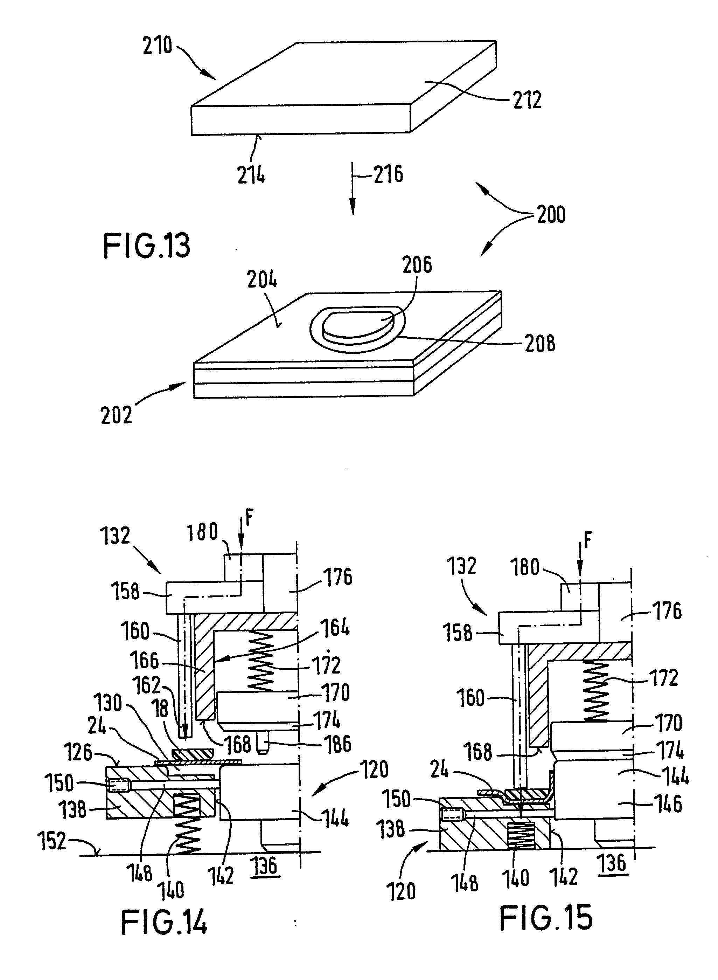

Im folgenden wird unter Bezug auf die Fig. 8 bis 18 die erfindungsgemäße Vorrichtung zum Herstellen der Zierschnalle 2a gemäß Fig. 7 beschrieben. Diese Vorrichtung weist ebenfalls ein Unterwerkzeug 120 sowie ein in Pfeilrichtung 122 auf das Unterwerkzeug 120 pressbares Oberwerkzeug 124 auf (siehe insbesondere Fig. 12). Das Unterwerkzeug 120 und das Oberwerkzeug 124 besitzen auch hier erfindungsgemäß einander zugekehrte Andruckflächen 126, 128 (Fig. 8 und 12). Wie am besten aus den Fig. 14 bis 18 erkennbar ist, weist das Unterwerkzeug 120 wiederum in seiner Andruckfläche 126 eine Aufnahme 130 für den Schnallenkörper 4 auf, wobei diese Aufnahme 130 hinsichtlich ihrer Flächenkontur sowie ihrer senkrecht zu der Andruckfläche 126 gemessenen Tiefe an die Raumform des jeweils verwendeten Schnallenkörpers 4 angepaßt ist. Hierzu wird auf die diesbezüglichen Ausführungen zu den Figuren 3 bis 6 verwiesen. Bei dieser erfindungsgemäßen Ausbildung kann das Oberwerkzeug 124 vorteilhafterweise aus einer einfachen, z.B. rechteckigen Druckplatte 131 bestehen.

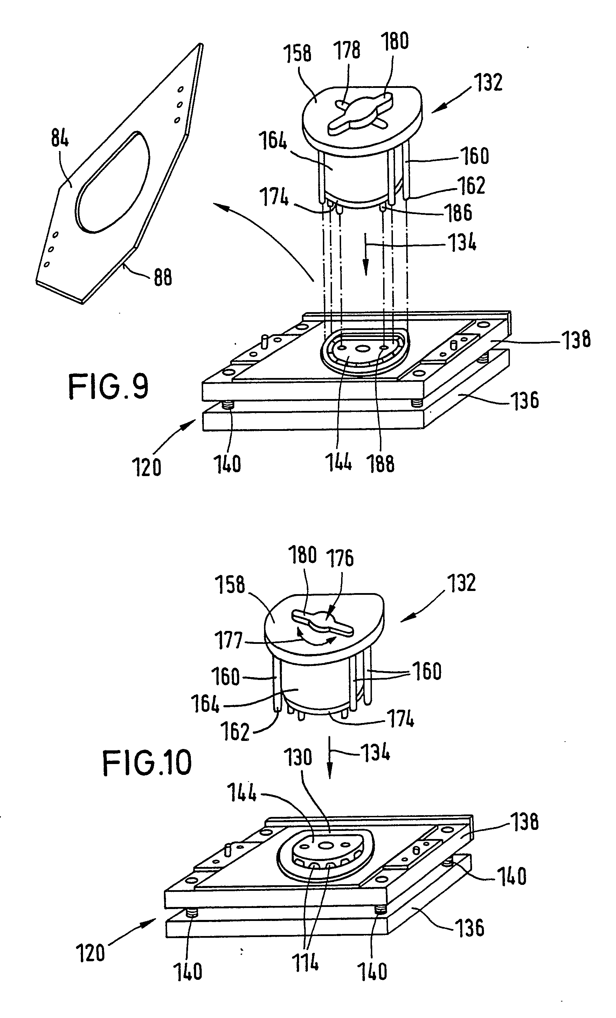

Bei der Ausführung der Zierschnalle 2a nach Fig. 7 ist es erforderlich, vor dem Zusammenpressen der beiden Bezugmaterial-Zuschnitte 24 und 26 mittels Unter- und Oberwerkzeug 120, 124 zunächst den inneren Rand 110 bzw. dessen Randlappen 114 von der Oberseite 20 auf die Unterseite 22 des Kerns 18 umzulegen. Hierzu ist erfindungsgemäß ein ebenfalls mit dem Unterwerkzeug 120 zusammenwirkendes Zwischenwerkzeug 132 vorgesehen (siehe Fig. 9, 10 sowie 14 bis 18), welches in definierter Ausrichtung in Pfeilrichtung 134 auf das Unterwerkzeug 120 aufsetzbar ist. Weiterhin ist auch das Unterwerkzeug 120 für dieses Umlegen des Randes 110 speziell ausgebildet, wie dies im folgenden beschrieben wird.

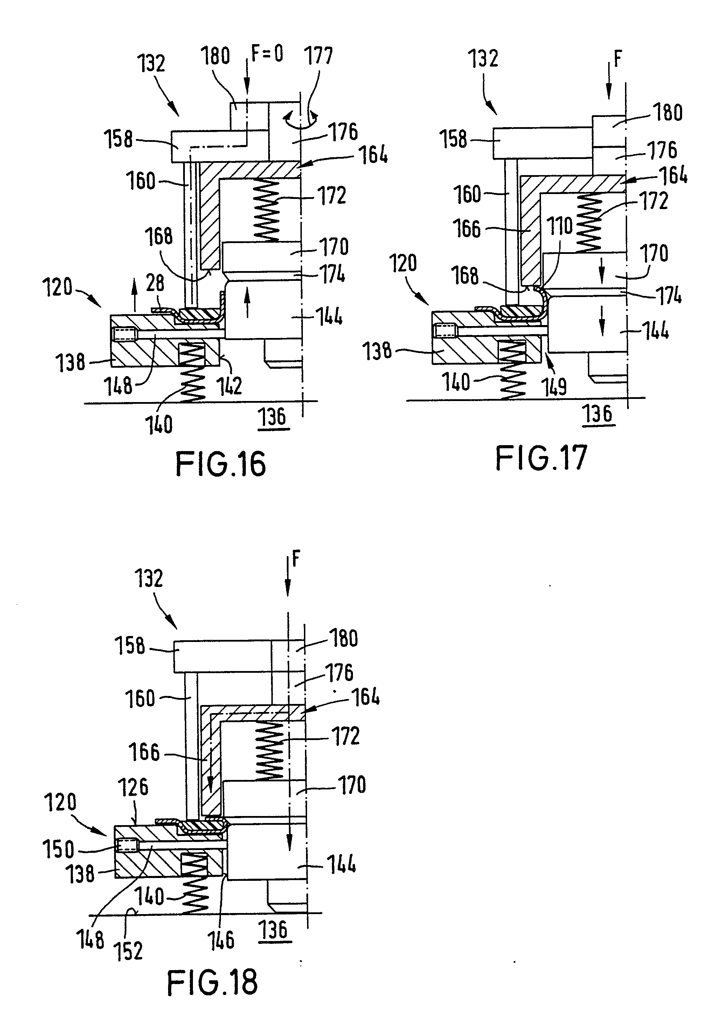

Das Unterwerkzeug 120 besitzt eine Grundplatte 136, auf der eine Gegendruckplatte 138 in zu der Andruckfläche 126 senkrechter Richtung federnd gelagert ist. Hierzu sind zwischen der Grundplatte 136 und der Gegendruckplatte 138 vorzugsweise vier bis zehn als Spiralfedern ausgebildete Druckfedern 140 angeordnet. Zusätzlich hierzu können nicht dargestellte Führungsbolzen vorgesehen sein. Die Gegendruckplatte 138 besitzt eine etwa der Form der Öffnung 8 der Zierschnalle 2a entsprechende Durchgangsöffnung 142. Im Winkelbereich zwischen der Andruckfläche 126 und der Durchgangsöffnung 146 weist die Gegendruckplatte 138 die Aufnahme 130 auf (Fig. 14). Innerhalb der Durchgangsöffnung 142 ist ein erstes Umlegeelement 144 kraftschlüssig gehalten, und zwar über mehrere, z.B. zwei, etwa parallel zu der Andruckfläche 126 in die Durchgangsöffnung 142 hineinragende und mit einer definierten Vorspannung auf der der Durchgangsöffnung 142 zugekehrten Umfangsfläche 146 des Umlegeelementes 144 aufliegende, z.B. stiftförmige Reibungsmitnehmer 148 (Fig. 14 bis 18). Diese Reibungsmitnehmer 148 können an ihrer an dem Umlegeelement 144 anliegenden Seite einen Reibbelag (nicht dargestellt) aufweisen. Das Umlegeelement 144 besitzt einen derart an die Durchgangsöffnung 142 der Gegendruckplatte 138 angepaßten Querschnitt, daß zwischen der Wandung der Durchgangsöffnung 142 und der Umfangsfläche 146 des Umlegeelementes 144 ein Umfangsspalt 149 (siehe Fig. 17) gebildet ist. Im dargestellten Beispiel erstrecken sich die Reibungsmitnehmer 148 von außen parallel zur Andruckfläche 126 durch Bohrungen der Gegendruckplatte 138 in den Umfangsspalt 149 hinein, wobei die Vorspannung über Gewindeverbindungen 150 einstellbar ist. Das erste Umlegeelement 144 besitzt eine senkrecht zur Andruckfläche 126 gemessene Höhe, die etwa gleich dem senkrechten Abstand zwischen der oberen Fläche 152 der Grundplatte 136 und der Andruckfläche 126 bei entspannten Druckfedern 140, d.h. in einer oberen, von der Grundplatte 136 beabstandeten Stellung der Gegendruckplatte 138, ist (siehe Fig. 14 und 18). Durch die beschriebene, erfindungsgemäße Ausgestaltung ist das Umlegeelement 144 innerhalb der Durchgangsöffnung 142 der Gegendruckplatte 138 relativ zu dieser in zu der Andruckfläche 126 senkrechter Richtung durch Beaufschlagung mit einer die von den Reibungsmitnehmern 148 erzeugte Reibungskraft übersteigenden Kraft beweglich. Bleibt diese Kraft jedoch unterhalb der

Reibungskraft, so wird bei Bewegungen der Gegendruckplatte 138 das Umlegeelement 144 über die Reibungsmitnehmer 148 mitgenommen. Der Zweck dieser Ausbildung wird im folgenden noch erläutert.

Das Zwischenwerkzeug 132 besteht aus einer Tragplatte 158, an der mindestens ein Druckstück 160 befestigt ist. Im dargestellten Beispiel sind mehrere, z.B. vier, stiftförmige, zueinander parallel angeordnete Druckstücke 160 vorgesehen, die sich bei der Anwendung der erfindungsgemäßen Vorrichtung senkrecht zu der Andruckfläche 126 des Unterwerkzeugs 120 erstrecken, und die erfindungsgemäß derart über die Fläche des Schnallenkerns 18 verteilt angeordnet sind, daß sie mit ihren freien Enden 162 (Fig. 14) vorzugsweise etwa im mittigen bis äußeren Flächenbereich zwischen dem äußeren Randbereich 17a und dem inneren Randbereich 17b des Kerns 18 bzw. der Zierschnalle 2a zur Auflage kommen (vgl. Fig. 7 in Verbindung mit Fig. 14 bis 18). Dabei ist es wesentlich, daß der innere Bereich der Oberfläche des Kerns 18 frei bleibt, da hier der umgelegte bzw. umzulegende Rand 110 des Bezugmaterial-Zuschnittes 24 zur Auflage kommt, wie dies noch beschrieben wird. Das Zwischenwerkzeug 132 besitzt weiterhin ein Andruckelement 164, das einen in der Kontur des Kerns 18 verlaufenden Andrucksteg 166 aufweist, in dessen Endbereich eine umfängliche Andruckfläche 168 (Fig. 14 bis 17) gebildet ist, die auf dem umgelegten Rand 110 des Bezugmaterials zur Auflage kommt, wie dies in Fig. 18 dargestellt ist. Innerhalb des Andruckelementes 164 ist ein zweites Umlegeelement 170 über z.B. als Spiralfedern ausgebildete Druckfedern 172 federnd gelagert sowie gegebenenfalls zusätzlich über nicht dargestellte Führungsbolzen geführt, wobei dieses zweite Umlegeelement 170 ebenso wie das erste Umlegeelement 144 des Unterwerkzeugs 120 einen an die Durchgangsöffnung 142 der Gegendruckplatte 138 angepaßten Querschnitt aufweist, der allerdings etwas größer als der Querschnitt des ersten Umlegeelementes 144 ist, d.h. zumindest der Größe der Öffnung 8 des Schnallenkerns 18 entspricht. Auf seiner dem ersten Umlegeelement 144 zugekehrten Seite besitzt das zweite Umlegeelement 170 eine umfängliche Anfasung 174. In der Ausgangsstellung (Fig. 14) steht das zweite Umlegeelement 170 etwa um die Höhe der Anfasung 174 über die Andruckfläche 168 des Andruckelementes 164 in Richtung des Unterwerkzeuges 120 vor. Das Andruckelement 164 ist erfindungsgemäß zusammen mit dem zweiten Umlegeelement 170 relativ zu der Tragplatte 158 und den Druckstücken 160 beweglich gelagert (Fig. 17 und 18), dabei jedoch vorzugsweise in einer oberen Stellung (Fig. 14 bis 16) arretierbar. Hierzu besitzt das Andruckelement 164 im dargestellten Ausführungsbeispiel einen vorzugsweise zentrischen Führungsansatz 176, der in Doppelpfeilrichtung 177 (Fig. 10 und 16) verdrehbar durch eine Öffnung 178 der Tragplatte 158 geführt ist und an seinem Ende einen Knebel 180 trägt, der in der oberen Stellung auf der Oberseite der Tragplatte 158 aufliegt (Fig. 9). Die Öffnung 178 besitzt einen dem Querschnitt des Knebels 180 entsprechenden Öffnungsquerschnitt, so daß der Knebel 180 in einer Drehstellung des Ansatzes 176 axial durch die Öffnung 178 hindurch in Richtung des Unterwerkzeugs 120 geführt werden kann (Fig. 17 und 18).

Das Unterwerkzeug 120 besitzt auch bei dieser Ausführung die Positionierungsanschläge 78, 80 und 82 zum lagerichtigen Ausrichten der Bezugmaterial-Zuschnitte 24, 26 (Fig. 8). Weiterhin weisen das Zwischenwerkzeug 132 und das Unterwerkzeug 120 ineinandergreifende Positionierungselemente auf, und zwar besitzt im dargestellten Ausführungsbeispiel das Zwischenwerkzeug 132 an dem zweiten Umlegeelement 170 stiftförmige Positionierungsansätze 186, die in entsprechende Positionierungsöffnungen 188 des Unterwerkzeugs 120 bzw. des ersten Umlegeelementes 144 eingreifen, wie dies am besten in Fig. 9 zu erkennen ist. Weiterhin ist auch hier wiederum die Einlegeschablone 84 zum Einlegen des Schnallenkerns 18 vorgesehen (Fig. 8 und 9). Zusätzlich kann zum Ausrichten des Bezugmaterial-Zuschnittes 26 ein Zentrierstück 190 (Fig. 11) vorgesehen sein, das z.B. aus einer an die Form der Öffnung 8 der Schnalle 2a angepaßten Platte besteht, die analog zu dem Zwischenwerkzeug 132 Positionierungsstifte 192 aufweist, die ebenfalls in die Positionierungsöffnungen 188 des Unterwerkzeugs 120 eingreifen.

Die Zierschnalle 2a wird nun erfindungsgemäß wie folgt hergestellt. Aus dem vorzugsweise bereits eine Klebebeschichtung aufweisenden Bezugmaterial 6 wird der obere Zuschnitt 24 hergestellt, was durch Ausschneiden oder aber vorzugsweise durch Ausstanzen mittels einer nicht dargestellten Stanzvorrichtung erfolgen kann. Gemäß Fig. 8 ist der Zuschnitt 24 rechteckig und besitzt eine an die Form des Schnallenkörpers 4 bzw. des Kerns 18 angepaßte Öffnung 182, die etwa um die Breite des umzulegenden Randes 110 kleiner als die Öffnung 8 der Schnalle 2a ist. Der Rand 110 wird außerdem durch die Einschnitte 112 in die Randlappen 114 unterteilt, was vorzugsweise in einem Arbeitsgang zusammen mit dem Ausstanzen des Zuschnittes 24 erfolgen kann. Weiterhin wird aus dem Bezugmaterial 6 auch der untere Zuschnitt 26 hergestellt, d.h. insbesondere ausgestanzt, der gemäß Fig. 11 ebenfalls rechteckig mit einer an die Form des Schnallenkerns 18 angepaßten Öffnung 184 ausgebildet ist, wobei jedoch diese Öffnung 184 im wesentlichen deckungsgleich mit der Öffnung 8 der Schnalle 2a ist.

Gemäß Fig. 8 wird nun der Zuschnitt 24 mit der Klebebeschichtung nach oben in Pfeilrichtung 194 auf das Unterwerkzeug 120 aufgelegt und mittels der Anschläge 78, 80 und 82 lagerichtig positioniert. Mittels der Einlegeschablone 84 wird nun der Schnallenkern 18 mit seiner Unterseite 22 nach oben auf dem Zuschnitt 24 positioniert. Hierzu wird auf die obige Beschreibung zu dem ersten Ausführungsbeispiel verwiesen.

Gemäß Fig. 9 und 10 wird nun mittels des Zwischenwerkzeuges 132 der Rand 110 des Zuschnittes 24 von der Oberseite 20 auf die nunmehr oben liegende Unterseite 22 des Kerns 18 umgelegt. Dieser Vorgang ist detailliert in den Fig. 14 bis 18 dargestellt, auf die im folgenden Bezug genommen wird.

Ausgehend von der in Fig. 14 dargestellten Stellung wird durch eine Kraft F die Tragplatte 158 des Zwischenwerkzeugs 132 zusammen mit den Druckstücken 160 in Richtung des Unterwerkzeugs 120 gedrückt, wobei die in die Positionierungsöffnungen 188 eingreifenden Positionierungsansätze 186 das Zwischenwerkzeug 132 lagerichtig zu dem Unterwerkzeug 120 positionieren. Die Kraft F kann - wie dargestellt - bei arretiertem Andruckelement 164 auch über den auf der Oberseite der Tragplatte 158 aufliegenden Knebel 180 ausgeübt werden. Über die Druckstücke 160, die zur Auflage auf der oben liegenden Unterseite 22 des Schnallenkerns 18 kommen, wird hierdurch der Kern 18 mit dem Bezugmaterial-Zuschnitt 24 in die Aufnahme 130 des Unterwerkzeugs 120 hineingedrückt (Fig. 15). Gleichzeitig wird hierdurch auch die Gegendruckplatte 138 gegen die Kraft der Druckfedern 140 in Richtung der Grundplatte 136 bewegt, bis sie auf dieser zur Auflage kommt (Fig. 15). Da sich das erste Umlegeelement 144 aber in der Ausgangsstellung bereits auf der Grundplatte 136 abstützt, ist die Gegendruckplatte 138 relativ zu dem ersten Umlegeelement 144 nach unten verschoben, so daß der umzulegende Rand 110 des Zuschnittes 24 durch die Umfangsfläche 146 des Umlegeelementes 144 nach oben gestellt wird (siehe ebenfalls Fig. 15). Diese relative Stellung zwischen der Gegendruckplatte 138 und dem ersten Umlegeelement 144 wird auch beibehalten, wenn das Zwischenwerkzeug 132 entlastet wird (F = 0), da hierdurch die Druckfedern 140 die Gegendruckplatte 138 von der Grundplatte 136 zurück nach oben drücken, wodurch aber aufgrund der Reibungsmitnehmer 148 das erste Umlegeelement 144 mitgenommen wird (Fig. 16). Der äußere Rand 28 des Zuschnittes 24 liegt etwa parallel zu der Andruckfläche 126 des Unterwerkzeugs 120. Der Knebel 180 wird nun in Doppelpfeilrichtung 177 soweit gedreht, bis er sich mit der Öffnung 178 deckt, so daß nunmehr durch die auf den Knebel 180 wirkende Kraft F über den Führungsansatz 176 das Andruckelement 164 in Richtung des Unterwerkzeugs 120 gedrückt wird. Wie aus Fig. 17 deutlich wird, wird hierdurch zunächst durch die Anfasung 174 des zweiten Umlegeelementes 170 der Rand 110 des Zuschnittes 24 etwas nach außen in Richtung des Andrucksteges 166 gedrückt, so daß er nachfolgend von dem Andrucksteg 166 bzw. von dessen Andruckfläche 168 auf den Kern 18 gedrückt wird, wie dies in Fig. 18 dargestellt ist. Während dieses Vorganges wird das erste Umlegeelement 144 von dem zweiten Umlegeelement 170 wieder nach unten in Richtung der Grundplatte 136 bewegt, wobei natürlich die Federkraft der Druckfedern 172 größer sein muß als die Reibungskraft der Reibungsmitnehmer 148. Ferner ist aber auch die Federkraft der Druckfedern 140 des Unterwerkzeugs 120 größer als die Reibungskraft der Reibungsmitnehmer 148. Die bisher beschriebenen Verfahrensschritte können erfindungsgemäß durch manuelle Kraftausübung durchgeführt werden.

Wie in Fig. 11 dargestellt ist, kann nun das Zwischenwerkzeug 132 abgenommen und der untere Bezugmaterial-Zuschnitt 26 mit der Klebebeschichtung nach unten in mittels des Zentrierstückes 190 ausgerichteter Lage aufgelegt werden.

Gemäß Fig. 12 folgt nun das eigentliche Gegeneinanderpressen der Bezugmaterial-Zuschnitte 24 und 26 unter Einschluß des Schnallenkerns 18 durch Aufpressen des Oberwerkzeugs 124 auf das Unterwerkzeug 120, und zwar vorzugsweise mittels einer nicht dargestellten Druckvorrichtung (Presse).

Abschließend werden noch die äußeren, parallel aneinanderliegenden Ränder 28 der Zierschnalle 2a beschnitten, wozu vorzugsweise eine in Fig. 13 dargestellte, erfindungsgemäße Stanzvorrichtung 200 vorgesehen ist. Diese Stanzvorrichtung 200 besitzt ein Unterteil 202 mit einer Andruckfläche 204, in der eine an den bezogenen Schnallenkern 18 angepaßte Aufnahme 206 gebildet ist. Weiterhin ist in der Andruckfläche 204 ein die Aufnahme 206 umschließendes, an die äußere Kontur der Ränder 28 angepaßtes Stanzmesser 208 gehaltert. Die Stanzvorrichtung 200 besitzt weiterhin ein Oberteil 210, das vorteilhafterweise aus einer einfachen Stanzplatte 212 mit einer Andruckfläche 214 besteht. Diese erfindungsgemäße Ausbildung hat den Vorteil, daß die Stanzplatte 212 bei Verschleiß der Andruckfläche 214 einfach gewendet werden kann, wodurch sich ihre Haltbarkeit verdoppelt. Zum Stanzen wird die Schnalle 2a nach Entnahme aus dem Unterwerkzeug 120 auf das Unterteil 202 der Stanzvorrichtung 200 gelegt, wobei der Kern 18 in der Aufnahme 206 und die Ränder 28 auf der Andruckfläche 204 angeordnet sind. Nachfolgend wird das Oberteil 210 in Pfeilrichtung 216 gegen das Unterteil 202 gepreßt, wodurch das Stanzmesser 208 die Ränder 28 in der gewünschten Form beschneidet. Die Zierschnalle 2a ist somit fertiggestellt.

Im Falle der Verwendung eines thermisch aktivierbaren Klebstoffes erfolgt auch hier die Verklebung durch Erhitzen, indem das Unterwerkzeug 120, das Zwischenwerkzeug 132 und/oder das Oberwerkzeug 124 beheizbar ausgebildet sind/ist.

Auch bei dieser Ausbildung der erfindungsgemäßen Zierschnalle 2a können noch gegebenenfalls zusätzlich im Bereich der äußeren Ränder 28 diese miteinander vernäht werden.

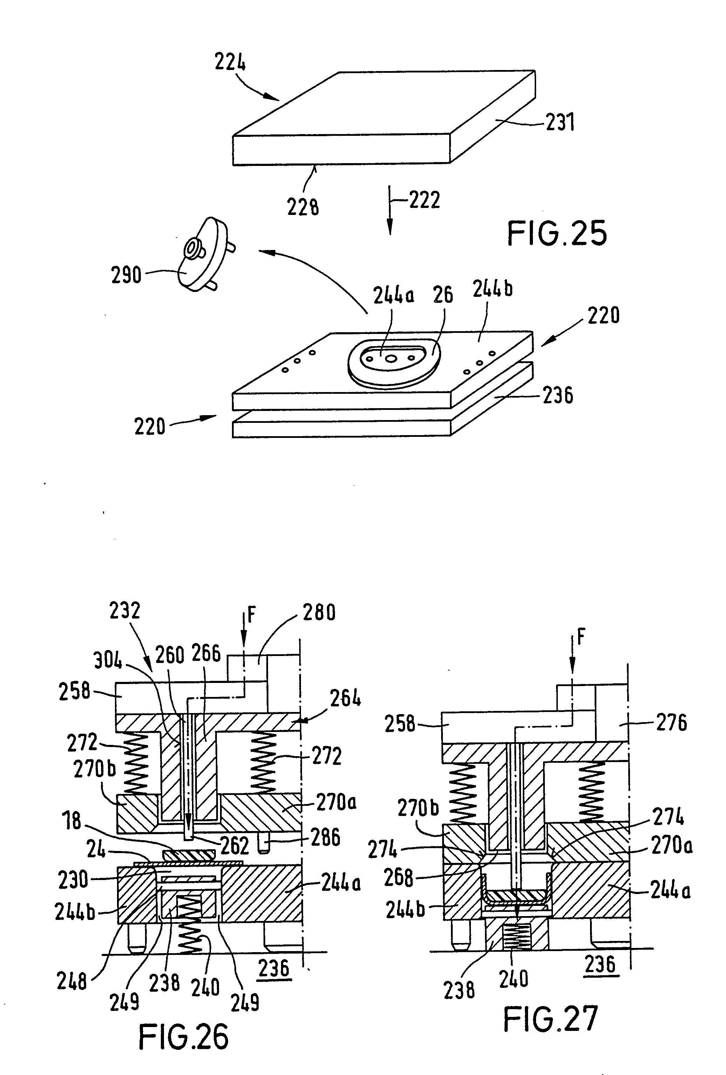

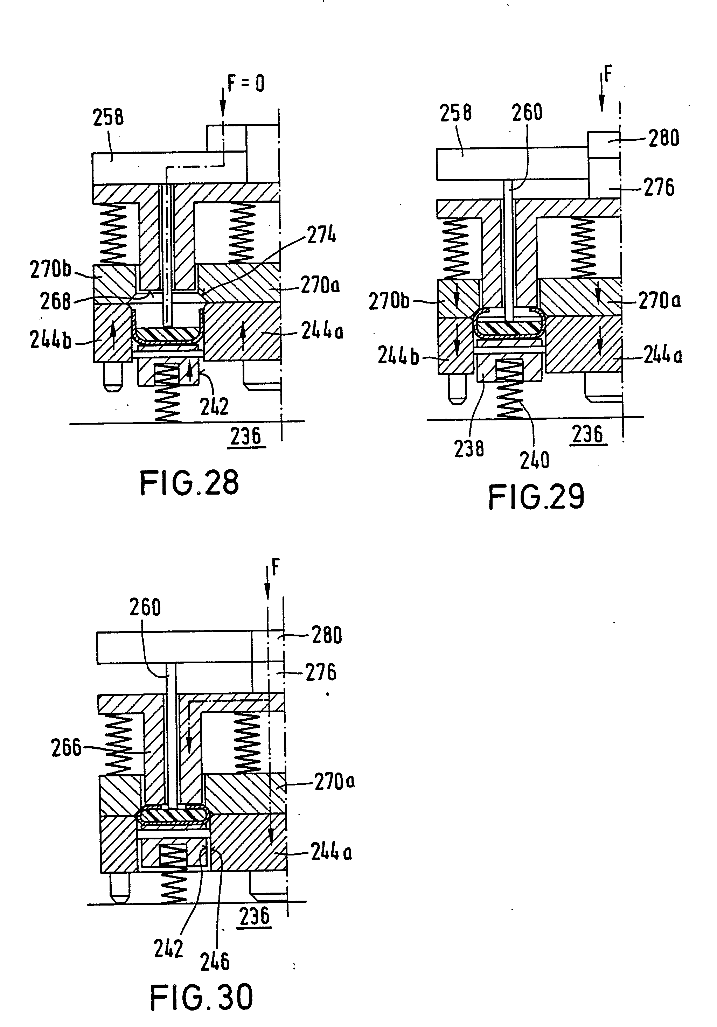

In den Fig. 20 bis 30 ist eine erfindungsgemäße Vorrichtung zum Herstellen der Zierschnalle 2b gemäß Fig. 19 dargestellt, wobei wiederum gleiche Teile wie in den übrigen Figuren mit den gleichen Bezugsziffern bezeichnet sind. Diese Vorrichtung weist wiederum ein Unterwerkzeug 220 sowie ein in Pfeilrichtung 222 auf das Unterwerkzeug 220 preßbares Oberwerkzeug 224 auf (siehe insbesondere Fig. 25). Hierbei ist das Oberwerkzeug 224 identisch mit dem Oberwerkzeug 124 gemäß Fig. 12. Das Unterwerkzeug 220 und das Oberwerkzeug 224 besitzen auch hier einander zugekehrte Andruckflächen 226, 228 (Fig. 20 und 25). Dabei ist im Bereich der Andruckfläche 226 des Unterwerkzeugs 220 wiederum eine Aufnahme 230 für den Schnallenkörper 4 gebildet, wobei diese Aufnahme 230 an die Raumform des jeweils verwendeten Schnallenkörpers 4 angepaßt ist.

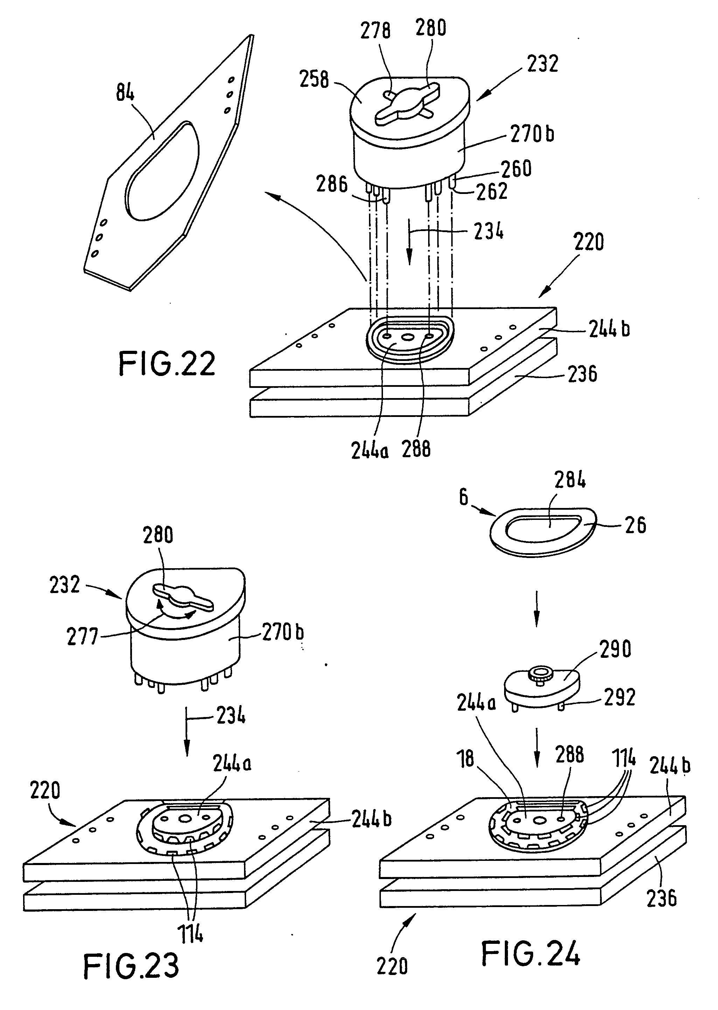

Bei der Ausführungsform der erfindungsgemäßen Zierschnalle 2b nach Fig. 19 ist es erforderlich, vor dem eigentlichen Zusammenpressen der beiden Bezugmaterial-Zuschnitte 24 und 26 mittels Unter- und Oberwerkzeug 220, 224 zunächst beide Ränder 110 bzw. deren Randlappen 114 von der Oberseite 20 auf die Unterseite 22 des Kerns 18 umzulegen. Hierzu ist wiederum erfindungsgemäß ein mit dem Unterwerkzeug 220 zusammenwirkendes Zwischenwerkzeug 232 vorgesehen (siehe Fig. 22, 23 sowie 26 bis 30), welches in definierter Ausrichtung in Pfeilrichtung 234 auf das Unterwerkzeug 220 aufsetzbar ist.

Aufgrund einer gewissen Analogie zu der Ausführung gemäß Fig. 8 bis 18 wird bezüglich der Ausgestaltung des Unterwerkzeugs 220 und des Zwischenwerkzeugs 232 auf die diesbezügliche Beschreibung des Unterwerkzeugs 120 und des Zwischenwerkzeugs 132 verwiesen, wobei die sich entsprechenden Teile nunmehr mit Bezugsziffern bezeichnet sind, die sich aus den bisherigen Bezugsziffern zuzüglich 100 ergeben. Im folgenden wird lediglich kurz auf die bestehenden Unterschiede eingegangen.

Zum Ausrichten des ersten Bezugmaterial-Zuschnittes 24 ist anstatt der Anschläge 78, 80, 82 ein weiteres Zentrierstück 300 (Fig. 20) vorgesehen, welches analog zu dem Zentrierstück 190 bzw. 290 ausgebildet ist, jedoch in seiner Größe der Öffnung 282 des Zuschnittes 24 entspricht.

Auch das Zentrierstück 300 weist Positionierungsstifte 302 auf, die in die Positionierungsöffnungen 288 des Unterwerkzeugs 220 eingreifen.

Die federnd auf der Grundplatte 236 gelagerte Gegendruckplatte 238 ist an die Form des Schnallenkörpers 4 angepaßt.

Die Umlegeelemente des Unterwerkzeugs 220 und des Zwischenwerkzeugs 232 teilen sich jeweils in ein inneres und ein äußeres Umlegeelement auf, d.h. das Unterwerkzeug 220 besitzt ein inneres, erstes Umlegeelement 244a und ein äußeres, erstes Umlegeelement 244b, und das Zwischenwerkzeug 232 weist ein inneres, zweites Umlegeelement 270a und ein äußeres, zweites Umlegeelement 270b auf.

Die stiftförmigen Druckstücke 260 des Zwischenwerkzeugs 232 sind durch Bohrungen 304 des Andrucksteges 266 des Andruckelementes 264 geführt, wobei die Druckstücke 260 im mittig zwischen dem äußeren und dem inneren Randbereich 17a, b des Kerns 18 liegenden Bereich zur Auflage kommen. Die Andruckfläche 268 des Andrucksteges 266 deckt dabei nahezu die gesamte Fläche des Kerns 18 ab, wodurch die umzulegenden Rän-, der 110 des Bezugmaterial-Zuschnittes 24 auf den Kern 18 gedrückt werden können (vgl. hierzu insbesondere Fig. 26 bis 30).

Zur Herstellung der Zierschnalle 2b kann ebenfalls auf die obige Beschreibung zu der Zierschnalle 2a verwiesen werden, da das Umlegen des Außenrandes 110 analog zu dem bereits beschriebenen Umlegen des inneren Randes 110 ist. Unterschiedlich ist allerdings das vorbereitende Zuschneiden der Bezugmaterial-Zuschnitte 24 und 26. Der obere Zuschnitt 24 weist nämlich eine an den Schnallenkern 18 angepaßte Form auf, die sowohl innen als auch außen jeweils um die Breite des Randes 110 größer ist. Dabei sind die Ränder 110 durch die bereits erwähnten Einschnitte 112 und/oder Ausschnitte 116 in die Randlappen 114 unterteilt (siehe Fig. 20). Gemäß Fig. 24 entspricht die Form des unteren Bezugmaterial-Zuschnittes 26 im wesentlichen der Form des Schnallenkerns 18.

Bei dieser Ausführungsform gemäß den Fig. 19 bis 30 kann vorteilhafterweise ein abschließendes Beschneiden aufgrund der hierbei nicht vorgesehenen Ränder 28 entfallen.

Die Erfindung ist nicht auf die dargestellten und beschriebenen Beispiele beschränkt, sondern umfaßt auch alle im Sinne der Erfindung gleichwirkenden Merkmale und Mittel. So ist es beispielsweise ebenfalls denkbar, eine Zierschnalle im inneren Randbereich 17b mit parallel aufeinanderliegenden Rändern 28 und im äußeren Randbereich 17a mit einem umgelegten Rand 110 auszubilden.

Eine entsprechende Vorrichtung zur Herstellung einer derartigen Zierschnalle ließe sich ebenfalls im Rahmen der vorliegenden Erfindung realisieren.

## Ansprüche

1. Zierschnalle z.B. für Gürtel, bestehend aus einem zumindest teilweise mit einem flexiblen Bezugmaterial bezogenen Schnallenkörper, **dadurch gekennzeichnet,** daß der Schnallenkörper (4) als Kern (18) mit einer Oberseite (20) und einer Unterseite (22) ausgebildet ist, und daß auf jeder Seite (20, 22) ein Zuschnitt (24, 26) aus dem Bezugmaterial (6) angeordnet ist, wobei die Bezugmaterial-Zuschnitte (24, 26) über mindestens eine Klebebeschichtung (30), den Kern (18) einschließend, stoffschlüssig miteinander und/oder mit dem Kern (18) verbunden sind.

2. Zierschnalle nach Anspruch 1, **dadurch gekennzeichnet,** daß die beiden Bezugmaterial-Zuschnitte (24, 26) flächenmäßig derart größer als der Kern (18) ausgebildet sind, daß sie den Kern (18) jeweils mit mindestens einem Rand (28) überragen, wobei sich die Ränder (28) parallel zueinander von dem Kern (18) weg erstrecken, und wobei die Klebebeschichtung (30) zumindest im Bereich des Randes (28) eines der Zuschnitte (24, 26) angeordnet ist.

3. Zierschnalle nach Anspruch 1 oder 2, **dadurch gekennzeichnet,** daß die Bezugmaterial-Zuschnitte (24, 26) im Bereich ihrer Ränder (28) zusätzlich vernäht sind.

4. Zierschnalle nach einem oder mehreren der Ansprüche 1 bis 3, **dadurch gekennzeichnet,** daß die Ränder (28) etwa in der Ebene der Unterseite (22) des Kerns (18) angeordnet sind.

5. Zierschnalle nach Anspruch 1, **dadurch gekennzeichnet,** daß der eine Zuschnitt (24) mindestens einen Rand (110) aufweist, der von der einen Seite (20) auf die andere Seite (22) des Kerns (18) verläuft und hier zwischen dem Kern (18) und dem anderen, im Bereich des Randes (110) mit dem Kern (18) etwa deckungsgleichen Zuschnitt (26) angeordnet ist.

6. Zierschnalle nach einem der Ansprüche 1 bis 5, **dadurch gekennzeichnet,** daß zumindest einer der Zuschnitte (24, 26) und/oder der Kern (19) auf zumindest einer seiner Seiten (20, 22) eine vorzugsweise vollflächige Klebebeschichtung (30) aufweisen/aufweist.

7. Zierschnalle nach einem der Ansprüche 1 bis 6, **dadurch gekennzeichnet,** daß die Klebebeschichtung (30) aus einem selbstklebenden, doppelseitigen Klebeband, einer doppelseitigen Klebefolie oder einem trägerlosen Klebstoff besteht.

8. Zierschnalle nach einem der Ansprüche 1 bis 7,
**dadurch gekennzeichnet,** daß die Klebebeschichtung (30) aus einem thermisch aktivierbaren Klebstoff besteht.

9. Zierschnalle nach einem oder mehreren der Ansprüche 1 bis 8,
**dadurch gekennzeichnet,** daß der Schnallenkörper (4) bzw. der Kern (18) rahmenförmig aus eine Öffnung (8) umschließenden Stegen (10, 12, 14, 16) mit einem äußeren, der Öffnung (8) abgekehrten Randbereich (17a) und einem inneren, der Öffnung (8) zugekehrten Randbereich (17b) gebildet ist.

10. Zierschnalle nach einem der Ansprüche 1 bis 8,
**dadurch gekennzeichnet,** daß der Schnallenkörper vollflächig, z.B. knopfförmig ausgebildet ist und vorzugsweise ein sich durch einen der Bezugmaterial-Zuschnitte erstreckendes, z.B. ösenförmiges Befestigungselement aufweist.

11. Vorrichtung zum Herstellen einer aus einem mit flexiblem Bezugmaterial bezogenen Schnallenkörper bestehenden Zierschnalle nach einem oder mehreren der Ansprüche 1 bis 10, mit einem Unterwerkzeug und einem auf das Unterwerkzeug preßbaren Oberwerkzeug,
**dadurch gekennzeichnet,** daß das Unterwerkzeug (40, 120, 220) und das Oberwerkzeug (44, 124, 224) einander zugekehrte Andruckflächen (46, 48; 126, 128; 226, 228) aufweisen, und daß in einem der Werkzeuge im Bereich seiner Andruckfläche eine an den Schnallenkörper (4) angepaßte Aufnahme (50, 130, 230) gebildet ist.

12. Vorrichtung nach Anspruch 11,
**dadurch gekennzeichnet,** daß die Aufnahme (50) als Vertiefung des Werkzeuges (40 bzw. 44) oder durch eine Durchgangsöffnung einer auf einer Aufnahmeplatte (94) befestigten, vorzugsweise wendbaren Stanzplatte (55) gebildet ist.

13. Vorrichtung nach Anspruch 11 oder 12,
**dadurch gekennzeichnet,** daß das Oberwerkzeug (44) eine die Andruckfläche (48) bildende Schicht (52) aus einem elastischen Material sowie vorzugsweise eine mit der Andruckfläche (46) des Unterwerkzeuges (40) zusammenwirkende Stanzmessereinrichtung (54) aufweist.

14. Vorrichtung nach Anspruch 13,
**dadurch gekennzeichnet,** daß die Stanzmessereinrichtung (54) aus mindestens einem in der äußeren Kontur der Ränder (28) der Bezugmaterial-Zuschnitte (24, 26) ausgebildeten Stanzmesser (60, 62) besteht.

15. Vorrichtung nach Anspruch 14,
**dadurch gekennzeichnet,** daß der von dem Stanzmesser bzw. von den Stanzmessern (60, 62) eingeschlossene Bereich der Andruckfläche (48) des Oberwerkzeuges (44) von einem Niederhalter (64) gebildet ist, der in einer zu der Andruckfläche (48) senkrechten Richtung gegen Federkraft beweglich gelagert ist.

16. Vorrichtung nach einem der Ansprüche 11 bis 15,
**dadurch gekennzeichnet,** daß innerhalb der Aufnahme (50) ein insbesondere aus einem elastisch komprimierbaren Material bestehender Auswerfer (76) angeordnet ist.

17. Vorrichtung nach einem der Ansprüche 11 bis 16,
**dadurch gekennzeichnet,** daß das Unterwerkzeug (40, 120) Positionierungsanschläge (78, 80, 82) für insbesondere rechteckige Stücke (56, 58) des Bezugsmaterials (6) aufweist.

18. Vorrichtung nach einem der Ansprüche 11 bis 17,
**gekennzeichnet durch** mindestens ein in lagerichtiger Ausrichtung auf das Unterwerkzeug (120, 220) aufsetzbares Zentrierstück (190, 290, 300), das eine an eine Öffnung (184, 282, 284) eines Bezugmaterial-Stückes (24, 26) und/oder an eine Öffnung (8) des Schnallenkörpers (4) angepaßte Form besitzt.

19. Vorrichtung nach einem der Ansprüche 9 bis 18,
**gekennzeichnet durch** eine in definierter Ausrichtung auf das Unterwerkzeug (40, 120) auflegbare Einlegeschablone (84), die eine mit der Aufnahme (50, 130, 230) fluchtende Einlegeöffnung (86) für den Schnallenkörper (4) besitzt.

20. Vorrichtung nach Anspruch 19,
**dadurch gekennzeichnet,** daß die Einlegeschablone (84) zumindest auf ihrer dem Unterwerkzeug (40, 120, 220) zugekehrten Unterseite (88) eine insbesondere aus PTFE betehende Anti-Haft-Beschichtung aufweist.

21. Vorrichtung nach einem der Ansprüche 11 bis 20,
**gekennzeichnet durch** ein in ausgerichteter Zuordnung auf das Unterwerkzeug (120, 220) aufsetzbares und mit dem Unterwerkzeug (120, 220) zum Umlegen von mindestens einem Bezugmaterial-Rand (110) zusammenwirkendes Zwischenwerkzeug (132, 232).

22. Vorrichtung nach Anspruch 21,
**dadurch gekennzeichnet,** daß das Unterwerkzeug (120, 220) mindestens ein den Bezugmaterial-Rand (110) in Richtung des Zwischenwerkzeugs (132, 232) hochstellendes Umlegeelement (144, 244a, 244b) aufweist, und daß das Zwischenwerkzeug (132, 232) mindestens ein den Schnallenkörper (4) in die Aufnahme (130, 230) des Unterwerkzeugs (120, 220) drückendes Druckstück (160, 260), mindestens ein den hochgestellten Rand (110) auf den Schnallenkörper (4) umlegendes Umlegeelement (170, 270a, 270b) sowie ein den Rand (110) auf den Schnallenkörper (4) pressendes Andruckelement (164, 264) aufweist.

23. Vorrichtung nach einem der Ansprüche 11 bis 22,

**dadurch gekennzeichnet,** daß zumindest das Unterwerkzeug (40, 120, 220) eine Heizeinrichtung zum Erhitzen seiner Andruckfläche (46, 126, 226) aufweist.

24. Verfahren zum Herstellen eine Zierschnalle nach einem oder mehreren der Ansprüche 1 bis 10, insbesondere unter Verwendung einer Vorrichtung nach einem der Ansprüche 11 bis 23, wobei mindestens ein Zuschnitt aus einem Bezugmaterial an einem Schnallenkörper befestigt wird,

**dadurch gekennzeichnet,** daß auf das Bezugmaterial und/oder auf den Schnallenkörper mindestens eine Klebebeschichtung aufgebracht wird, daß aus dem Bezugmaterial zwei den Schnallenkörper flächenmäßig zumindest überdeckende Stücke zugeschnitten werden, und daß die Bezugmaterial-Stücke nachfolgend unter Einschluß des Schnallenkörpers gegeneinandergepreßt und hierdurch stoffschlüssig miteinander und/oder mit dem Schnallenkörper verbunden werden.

25. Verfahren nach Anspruch 24,

**dadurch gekennzeichnet,** daß durch das Zuschneiden der Bezugmaterial-Stücke jeweils mindestens ein den Schnallenkörper überragender Rand gebildet wird, wobei die Bezugmaterial-Stücke zumindest im Bereich dieser Ränder miteinander verklebt werden.

26. Verfahren nach Anspruch 25,

**dadurch gekennzeichnet,** daß die Ränder nach dem Verkleben beschnitten und/oder zusätzlich vernäht werden.

27. Verfahren nach Anspruch 25 oder 26,

**dadurch gekennzeichnet,** daß unmittelbar nach dem oder während des Gegeneinanderpressens der Bezugmaterial-Stücke aus diesen endgültige Bezugmaterial-Zuschnitte unter Bildung des Randes ausgestanzt werden.

28. Verfahren nach einem der Ansprüche 24 bis 27,

**dadurch gekennzeichnet,** daß vor dem Gegeneinanderpressen der Bezugmaterial-Stücke mindestens ein Rand des einen Bezugmaterial-Stückes von der einen Seite auf die andere Seite des Schnallenkörpers umgelegt wird.

29. Verfahren nach einem der Ansprüche 24 bis 28,

**dadurch gekennzeichnet,** daß die Bezugmaterial-Stücke vollflächig mit dem Schnallenkörper verklebt werden.

30. Verfahren nach einem der Ansprüche 24 bis 29,

**dadurch gekennzeichnet,** daß ein thermisch aktivierbarer Klebstoff verwendet wird, wobei die Bezugmaterial-Stücke während des Gegeneinanderpressens zum Aktivieren des Klebstoffs erwärmt werden.

FIG. 1

FIG. 2

FIG. 3

5069

FIG. 4

5069

FIG. 5

FIG. 6

FIG.7

FIG.8

EP 0 324 051 A1

5069

FIG.9

FIG.10

5069

FIG.11

FIG.12

5069

FIG.13

FIG.14

FIG.15

5069

FIG.16

FIG.17

FIG.18

5069

FIG.19

FIG.20

FIG.21

FIG.22

FIG.23

FIG.24

5069

224

231

228

222

FIG.25

290

244a 26 244b

220

236

220

232      F    280
304  260 266
258                    264
272                    272
270b
270a
18
24                     286
230                    244a
244b
248  238 240 249
249

FIG.26

258                    276

270b                   274
274                    270a
268
244b                   244a
238   240

236                    236

FIG.27

5069

FIG.28

FIG.29

FIG.30

5069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | US-A-2228771 (S. LEVIN) * Seite 2, Spalte 1, Zeile 66 - Seite 3, Spalte 2, Zeile 73; Figuren 1-13 * --- | 1-5, 11, 24, 26, 28 | A44B11/00 B29C63/04 |
| X | FR-A-1074513 (TH. MULLER) * das ganze Dokument * --- | 1, 6, 8, 11, 23, 24, 29, 30 | |
| X | GB-A-703205 (ARNOLD WILLS AND CO. LTD) * Seite 2, Zeile 4 - Zeile 124; Figuren 1-5 * --- | 1, 2, 4, 9, 11, 17, 24, 25, 30 | |
| A | DE-B-1082397 (OTTO BERNING & CO) * das ganze Dokument * --- | 1, 4, 9, 11, 24 | |
| A | GB-A-755327 (MYER SHENDEREY) * Seite 2, Zeile 52 - Zeile 110; Figuren 1-10 * ----- | 24, 26, 27 | |

**RECHERCHIERTE SACHGEBIETE (Int. Cl.4 )**

A44B
B29C

Der vorliegende Recherchenbericht wurde für alle Patentansprüche erstellt

| Recherchenort | Abschlußdatum der Recherche | Prüfer |
|---|---|---|
| DEN HAAG | 21 APRIL 1989 | GARNIER F.M.A.C. |